(19) Europäisches Patentamt
European Patent Office
Office européen des brevets

(11) **EP 3 577 078 B1**

(12) **EUROPEAN PATENT SPECIFICATION**

(45) Date of publication and mention
of the grant of the patent:
**24.03.2021 Bulletin 2021/12**

(51) Int Cl.:
***C02F 1/04*** (2006.01)   ***C02F 1/26*** (2006.01)
***C02F 11/14*** (2019.01)   ***B01D 1/14*** (2006.01)

(21) Application number: **18708477.7**

(22) Date of filing: **02.02.2018**

(86) International application number:
**PCT/IB2018/050681**

(87) International publication number:
**WO 2018/142349 (09.08.2018 Gazette 2018/32)**

(54) **PROCESS FOR REMOVING WATER FROM A MIXTURE**

VERFAHREN ZUR ENTFERNUNG VON WASSER AUS EINEM GEMISCH

PROCÉDÉ D'ÉLIMINATION DE L'EAU D'UN MÉLANGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2017 IT 201700012149**

(43) Date of publication of application:
**11.12.2019 Bulletin 2019/50**

(73) Proprietors:
• **Omega S.A.S. Di Mario Alberto dell'
Omodarme&C.**
**56127 Pisa (IT)**
• **Ingar di Fernando Horacio Garcia&C.S.A.S.**
**58022 Follonica (GR) (IT)**

(72) Inventors:
• **GARCIA, Maria Fernanda**
**58022 Follonica (GR) (IT)**
• **DELL'OMODARME, Mario Alberto**
**56128 Tirrenia (PI) (IT)**
• **GARCIA, Maria De Los Angeles**
**58023 Bagno di Gavorrano (GR) (IT)**
• **GARCIA, Fernando Horacio**
**58022 Follonica (GR) (IT)**

(74) Representative: **Celestino, Marco
ABM Agenzia Brevetti & Marchi
Viale Giovanni Pisano 31
56123 Pisa (IT)**

(56) References cited:
**AU-B2- 500 691     US-A1- 2003 089 671**

## Description

<u>Field of the invention</u>

The present invention relates to a process for removing water from such a mixture as a salt solution, a more or less concentrated solid dispersion, or a wet solid.

The process can be used for concentrating a water solution of any solute, for example a salt, as an alternative to evaporative concentration, in particular it can be used to crystallize a salt from a water solution thereof.

The process can also be used for drying wet solids, in particular for drying an inert material and/or a sludge.

<u>Description of the prior art</u>

Many evaporative methods are known for removing water from a mixture. In particular, for concentrating water solutions, an amount of water is evaporated by supplying heat. These methods require a high heat amount, since water, which is a strongly polar liquid, has a particularly high latent heat with respect to other industrial solvents. Moreover, the heat must be available at a temperature reasonably higher than the boiling point of water. In fact, the heat exchange must take place through a limited exchange surface, as the one provided by common heat exchange means, such as stirred tanks or shell-and tube heat exchangers.

In order to reduce energy consumption, the solution to be concentrated is caused to pass through a plurality of serially arranged evaporative units, working at a decreasing pressure throughout the plurality. The vapor produced by evaporating the water of one unit is used for heating a subsequent unit, which is maintained at a lower pressure. As an alternative, are required thermocompression evaporators are used, in which the vapor produced by evaporation is compressed, in order to increase its the temperature and to exploit it to supply heat to the evaporating solution.

These expedients introduce construction complications, however without overcoming the above-described drawbacks of the thermal evaporative concentration systems. These drawbacks lead to particularly high costs in the case of crystallization, in which a substantially quantitative water removal is required. Moreover, when a dry salt is desired, a further drying equipment is needed downstream the evaporator.

The conventional driers have similar but more severe drawbacks, since heat exchange must be ensured in the presence of a solid phase, often by using a heating gas, which provides a low heat exchange coefficient.

Moreover, before being thermally dried, the sludges are normally filtered, usually by a filter press. This way, when treating a polluted sludge, the filtered retains also soluble pollutants. For this reason also the liquid waste, besides the solid one, requires a special treatment.

Another process for removing water from mixtures is known from patent AU 500691 B2, wherein acetone is used to extract water from the mixture.

<u>Summary of the invention</u>

It is therefore a feature of the present invention to provide a process for removing water from a mixture, for example, for concentrating a water solution as it is required to crystallize a salt dissolved therein, or for drying a solid, said process being less energy-consuming than the prior art methods providing an evaporation of the water of the mixture.

It is also a feature of the invention to provide such a process that can be carried out by using heat available at a temperature lower than the temperature required in the prior art methods.

It is also a feature of the invention to provide such a process that does not produce polluting wastewater, in particular when drying a polluted sludge.

It is a particular feature of the invention to provide such a process that makes it possible to obtain a solid free from hydration water, in particular a dry solid, in a single step.

These and other objects are achieved by a process for removing water from a mixture containing water and a compound, the mixture at an initial ratio between the water and this compound, the process comprising the steps of:

- prearranging a treatment container in which the mixture is present;
- feeding a stream of a treatment gas containing ammonia $NH_3$, into the treatment container, and causing a contact with the mixture, in such a way that a part of the ammonia reacts with the water of the mixture, forming ammonium hydroxide $NH_4OH$;
- maintaining the mixture at a treatment temperature higher than 27°C, at which the ammonium hydroxide is in a gaseous state,
- extracting an exhausted gas stream comprising the ammonium hydroxide and an unreacted treatment gas, so as to progressively remove water from the mixture while the treatment gas stream is supplied and the exhaust gas stream is extracted in/from the treatment container, and therefore the mixture is concentrated;

- continuing the steps of feeding, maintaining and extracting at least until a final concentrate of the compound is obtained at a predetermined final water/compound ratio.

Practically, the process comprises a step of stripping the mixture by an ammonia-containing gas stream, for example by substantially pure ammonia, associated with a heterogeneous equilibrium reaction between ammonia in the gaseous state and the water in the liquid state,

$$NH3(g) + H_2O\ (I) \leftrightharpoons NH_4OH\ (I) \qquad\qquad [1]$$

providing ammonium hydroxide, which is initially in the liquid state. The step of extracting the gas, and the step of maintaining the temperature above 27°C, which corresponds to the ammonium hydroxide boiling point, makes it possible to remove the ammonium hydroxide from the mixture taking away the hydrogen and oxygen atoms of the water, with which one part of the ammonia becomes bonded. This way, the water amount in the treatment container decreases, and therefore the water/compound ratio decreases as well, for example, the compound concentration in a treated water solution increases. This provides a route alternative to direct water evaporation, to remove water from the compound. In fact, the equilibrium according to [1] is described by an equilibrium constant K corresponding to a ratio of ammonium hydroxide concentration to the product of the concentrations of ammonia and water:

$$K = \frac{[NH_4OH]}{[NH_3]\cdot[H_2O]}.$$

Therefore, once achieved an initial equilibrium, while the ammonia-containing gas stream continues to be fed, this equilibrium tends to be shifted towards ammonium hydroxide formation, which consumes water. This trend goes on indefinitely, due to the removal of ammonium hydroxide product along with the exhaust gas stream that leaves the treatment container.

The low ammonium hydroxide boiling point makes it possible to carry out this step at a moderate temperature. Advantageously, the treatment temperature is set in the range from 40°C to 60°C. This allows using a heat source at a temperature lower than the temperatures required for the systems based on thermal evaporation of water, in which the heat source must be at a considerably higher temperature, i.e. at least 20-30°C above the water boiling point, which is 100°C if the working pressure is the atmospheric pressure in at least one part of the evaporation units of the system, or during at least one part of the evaporation, as it occurs in a continuous process, in which a plurality of serially-arranged units are used at decreasing pressures with respect to one another, and in a batch system operated at a pressure decreasing with time, respectively.

This allows using waste heat available from a wide range of production processes.

Moreover, the step of maintaining the temperature of the solution requires a heat amount that is far lower than the one required for the concentration processes based on water evaporation. In fact, the heat released to the solution must substantially compensate for:

- thermal losses from the evaporating unit to the environment, which are small due to the low operating temperature, and can in any case be contained by a suitable thermal insulation; in the water evaporation-based processes, instead, a heat amount must be provided corresponding to the high vaporization enthalpy of water;
- the small vaporization enthalpy of ammonium hydroxide.

As described, this process is well suited to treat a mixture comprising water and a compound, which can also be non-homogeneous. The compound may be dissolved in the water and form a homogeneous solution in it. The compound can also be present as a solid in the mixture, which is in this case a suspension or a dispersion, since the beginning of the process or since an intermediate step thereof.

The process according to the invention can be used in a of crystallizing a salt having a predetermined saturation concentration in water, in which the mixture is initially a homogeneous solution, and the step of extracting the exhausted gas is continued until the salt saturation concentration is exceeded, so as to crystallize the salt in the treatment container. The mixture can also be a two-phase mixture since the beginning the treatment, or only in a late step thereof, in which case a precipitate of the compound forms a slurry, such as a brine, or even a sludge, in which the liquid phase is the dispersed phase and the solid Is the continuous phase. In other words, a phase inversion can take place during the concentration step of a crystallization and/or drying process of the compound, in which case the treated material becomes a material wet with imbibition water or, in the case of a salt, also with hydration water, which can be removed from the process according to the invention. To this purpose, the steps of feeding, maintaining and extracting the exhausted gas can be continued down to a predetermined moisture amount left in the compound, in particular until the compound is substantially dry.

Preferably, a final step is provided of adding an alkaline reagent in order to remove an ammonium hydroxide residue from the final concentrate. As an alternative, the ammonium hydroxide residue can be removed by gas stripping, in particular with air, or nitrogen if the concentrated compound can be easily oxidized. As an alternative, or in addition, a step of heating can be provided in both cases, up to a predetermined purification temperature.

In an exemplary embodiment, the treatment container is a tank, the mixture forms a liquid head in the tank, and the ammonia-containing treatment gas stream is fed below the liquid head. In this case, furthermore, the step of extracting the exhaust gas stream takes place through a vent line of the tank, hydraulically connected with it.

In an exemplary embodiment, a further tubular container is arranged along the vent line, containing contact-promoting members to assist the contact between a liquid phase and a gaseous phase. The contact-promoting members can comprise a packing material randomly arranged in the tubular treatment container, or a structured packing material. This is therefore substantially an absorption column for absorbing a gas into a liquid, in which a liquid-phase chemical reaction takes place. In this configuration, the process comprises a step of recycling an amount of the mixture between an outlet and an inlet of the tank, said recycling carried out through the tubular container during the steps of feeding the treatment gas, maintaining the temperature and extracting the exhausted gas.

The use of this tubular container containing contact-promoting members assists the water removal from averagely or strongly alkaline solutions. The process according to this exemplary embodiment of the invention can be advantageously used to concentrate an alkaline solution, such as a sodium hydroxide solution, in particular from a concentration of about 30% to a commercial concentration of 50%. In fact, if ammonia is fed into a mass of such an alkaline solution, without providing contact-promoting members, the pre-existing OH⁻ ions cause the equilibrium reaction

$$NH3(g) + H_2O\ (l) \leftrightarrows NH_4OH\ (l) \qquad [1]$$

to be shifted to the left, i.e. they do not assist the ammonium hydroxide formation and allows gaseous ammonia to leave the liquid, without an acceptable extent of the reaction with water.

In particular, the tubular container is mounted to the tank similarly to a reflux condenser, i.e. in such a way to drop a liquid present in the tubular container back into the tank. For instance, the step of recycling comprises a step of pumping the mixture from the outlet of the tank to an upper end portion of the tubular container. In this exemplary embodiment, in the step of feeding the treatment gas stream, at least one part of the gas can be fed at a lower end portion of the tubular container.

In other words, the treatment container can comprise a tank and a tubular container in communication with each other, and arranged as described above, in particular with the tubular container, or the column, mounted to the tank the same way as a reflux condenser, and a step of recycling the mixture can be provided, and the step of feeding the treatment gas can be carried out in the way described above.

If the mixture to be treated is substantially liquid, the treatment container can also be a tubular container provided with internal contact-promoting members to promote a contact between a liquid phase and a gaseous phase, such as a randomly arranged packing material or a structured packing material. In this case, the mixture to be treated and the treatment gas are preferably fed in such a way to cause a countercurrent flow.

Preferably, the tubular container is arranged vertically, forming a column configured to absorb a gas into a liquid, in which a chemical reaction takes place in the liquid phase. The mixture to be treated and the treatment gas are typically fed at upper and lower end portions, respectively, of the treatment container, such that the steps of collecting the concentrate and extracting the exhausted gas are carried out at lower and upper end portions, respectively, of the treatment container.

Advantageously, the process comprises a step of recycling a portion of the withdrawn concentrate to a section of the treatment container, for example to the top thereof, this portion being increased or reduced according to a measured value of the compound concentration in the concentrate, according to whether this is higher or lower than a predetermined concentration, respectively.

The step of maintaining the temperature can comprise a step of supplying heat to the mixture to be treated to a tank and/or to a feed line of the column, and/or to the recycled concentrate in a recycle line of the column.

In an exemplary embodiment of the process, the mixture comprises a wet solid containing said compound or a plurality of compounds, in particular the mixture can be a waste mud from an industrial process, and the water is an imbibition water of the compound or the compounds. In this case, a preliminary step is preferably provided of granulating the sludge, i.e. a step of reducing it into pieces having a predetermined granulometry, in order to assisting the contact thereof with the treatment gas.

In this case, the treatment container can comprise a tubular container comprising an internal wet-solid conveying means, in particular a screw conveying means, and a gas-distribution means, providing this way a treatment screw conveyor. Preferably, the mixture to be treated and the treatment gas are fed at end opposite portions of the tubular container, so as to provide a substantially countercurrent flow.

The process according to the invention can be used in a method for obtaining a concentrate solution of polyphenols, in particular from the olive mills wastewater, and the like.

The process according to the invention can be used in a method for treating a process liquid waste containing water, an acid, for example a mineral acid, and metal cations, the method comprising the steps of the above-described process, wherein the step of prearranging the mixture to be treated comprises a preparation step in turn comprising the steps of:

- prearranging the liquid waste;
- alkalizing it by adding an alkaline additive to the liquid waste, until a predetermined final pH value is reached in the liquid waste, in order to cause the cations to precipitate as solid metal hydroxides, the alkaline additive forming its own dissolved ions;
- separating the solid metal hydroxides from the liquid waste and obtaining the mixture to be treated consisting of a homogeneous solution of the compound comprising a salt of the ions of the alkaline additive and of an anion of the acid, the method providing a treatment of the mixture obtained this way according to the steps of the above-described process, wherein the compound comprises the above-mentioned salt, and wherein the treatment gas stream contains a second amount of ammonia.

With such a method, the advantages of the process for removing water according to the invention can be extended to the treatment of acid waste water, as defined above. More in detail, this method makes it possible to reduce the energy consumption, to use a low-temperature heat source and to obtain a final wastewater that can be released to the environment after simple conventional treatments.

For instance, the acid can be a mineral acid such as sulphuric acid, nitric acid, hydrochloric acid, phosphoric acid, hydrofluoric acid and the like, or a mixture thereof. In particular, the acid that is present in the waste is sulphuric acid, thereby the salt is a sulphate of the cation of the alkaline additive.

For instance, the metal cations can be cations of metals like iron, aluminium, titanium, manganese and so on. Preferably, the final pH value is higher than 9.5, more in particular, it is higher than 10.0, so as to cause the metal cations to precipitate quantitatively.

Moreover, by this method, a concentrated or a solid is produced that comprises a salt depending upon the alkaline additive, besides the acid that is present in the waste. The alkaline additive can be advantageous selected in such a way that a useful and/or valuable product is obtained. For example, it can be advantageous to use a magnesium compound as the alkaline additive, like the oxide $MgO$, the hydroxide $Mg(OH)_2$ or the carbonate $MgCO_3$.

In this case, the alkalizing step can comprise:

- a step of adding an amount of one of the magnesium compounds as a first alkaline additive, its amount selected so as to attain an intermediate pH value lower than 5.5 in the liquid waste, in order to cause a first portion of the cations to precipitate as solid metal hydroxides;
- a step of feeding a second alkaline additive to the waste, comprising a first amount of ammonia, until a predetermined final pH value is reached, in order to cause a residual second portion of the cations to precipitate as solid metal hydroxides,

  in which case the step of separating provides a filtrate as the mixture to be treated by the process according to the invention, which is a homogeneous solution of two compounds, i.e. of a first magnesium salt and of a second ammonium salt, the first and the second salts comprising the anion provided by the acid that is present in the waste water. In particular if this acid is sulphuric acid, the mixture comprises magnesium sulphate and ammonium sulphate.

Intermediate pH value can be selected in such a way to optimize the costs in connection with the feeding of the alkaline additive, on the one hand, and of the ammonia-containing treatment gas. The intermediate pH value is preferably lower than 5.5, more in particular, it is lower than 5.0, in order to reduce or to avoid the precipitation of the cations of the alkaline additive itself and therefore to reduce or to avoid the loss of magnesium along with the hydroxides.

The process according to the invention can be used in a method for making an ammonium salt of a mineral acid, such as ammonium sulphate, the method comprising the steps of the above described process, wherein the step of prearranging the mixture to be treated comprises a preparation step in which steps are provided of:

- prearranging a water solution of this acid mineral;
- feeding a first amount of ammonia water solution, forming ammonium ions in the solution, until the latter reaches a predetermined concentration of the ammonium salt, obtaining a mixture that is a homogeneous solution of the ammonium salt,

  the method providing a treatment of the mixture obtained this way according to the steps of the above-described process, wherein the compound comprises the ammonium salt.

Preferably, steps are provided of condensing ammonium hydroxide from the exhaust gas stream, and of collecting the condensed ammonium hydroxide in the form of a water solution.

Advantageously, steps are provided of regenerating and recovering gaseous ammonia starting from the condensed ammonium hydroxide, the step of regenerating comprising the steps of:

- adding an alkaline reagent to the ammonium hydroxide water solution, in order to increase the pH and to release regenerated gaseous ammonia;
- maintaining a regeneration temperature in the hydroxide water solution;
- feeding the regenerated gaseous ammonia to the treatment container along with the treatment gas stream.

The alkaline reagent can be calcium hydroxide $Ca(OH)_2$, in particular at a concentration of 2 g/l.

The steps of treating the ammonium hydroxide to regenerate and recover the ammonia used to form $NH_4OH$ in a given manufacturing cycle makes it possible to use substantially all this ammonia in a subsequent cycle.

This way, the net ammonia consumption is kept at a minimum value. In particular, if the process is used in a method for making an ammonium salt, as described above, the net ammonia consumption is substantially the same as the amount of ammonia that is required for making ammonium ions in the solution or in the mixture. In the other cases, instead, the net ammonia consumption is substantially zero, apart from the amount that is fed at the beginning of a sequence of manufacturing cycles, or that is made up to compensate for regular or extraordinary small purging.

A further effect of the quantitative ammonia regeneration and recovery is that, once all the ammonia has been released from the ammonium hydroxide water solution obtained by condensing the exhausted gas, a waste matter is left which contains only water and the alkaline reagent, such as lime $Ca(OH)_2$ that has been added at the beginning of the process, along with residual ammonia traces. In fact, the condensate from which this waste water has been obtained by distilling the ammonium hydroxide, and it is therefore free form pollutants that may be present in the treated mixture, as it is the case, for instance, of a waste mud coming from an industrial process. If such pollutants are present, they remain in the final concentrate produced starting from the mixture in the treatment container.

To this purpose, the step of regenerating is carried out by sequentially using more regeneration reactors, wherein a first reactor thereof:

- receives the ammonium hydroxide solution from a collection tank of the condensate obtained from the exhausted vapours, and
- is pneumatically connected with the treatment container, so as to bring a gas leaving the first reactor into contact with the mixture contained in the treatment container.

The addition of the alkaline reagent to the ammonium hydroxide solution in the first reactor causes the generation of ammonia and therefore a decrease of the ammonium hydroxide concentration, indicated by a concentration detector device arranged in the first reactor. When this concentration becomes lower than a maximum predetermined value, such that $NH_4OH$ can be practically considered absent, the first reactor is disconnected from the treatment container and a second regeneration reactor, into which an amount of ammonium hydroxide water solution from the collection tank has been preliminarily arranged, is in turn pneumatically connected to the treatment container and fed with the alkaline reagent, in order to generate in turn gaseous ammonia and to bring the latter into contact with the treated mixture in the treatment container. Once the ammonium hydroxide has been exhausted also in the second reactor, a third reactor, or again the first reactor, can be used in turn as described above, in order to continue the regeneration.

This way, the final waste water contained in each regeneration reactor, at the end of the regeneration, contains only water and lime, and can become suitable for discharge into open water bodies, complying the good technique and environmental regulations by easy and cheap final purification treatments.

Advantageously, the method provides at least one step of treating the waste water removed from the regeneration reactors, selected from the group consisting of:

- a pH-adjustment step, i.e. a regeneration step, in order to lower the alkalinity due to the alkaline reagent, e.g. lime $Ca(OH)_2$, used to generate ammonia, wherein the addition of an acid agent like 1N hydrochloric acid is provided;
- a filtration step or a passage through a granular material bed adapted to retain residual ammonia traces, for example a granular activated carbon bed.

Brief description of the drawings

The invention will be now shown with the following description of exemplary embodiments thereof, exemplifying but not limitative, with reference to the attached drawings in which:

- Fig. 1 shows a block diagram of a process according to the invention;
- Figs. 2 and 3 show a flow-sheet of an apparatus for carrying out the process of Fig. 1 or of Fig. 7, during and at the end of the treatment, respectively;
- Fig. 4 shows a flow-sheet of an apparatus for carrying out an exemplary embodiment of the process of Figs. 1 or 7, during the treatment;
- Fig. 5 shows a block diagram of the step of preparing a mixture to be treated by the process, starting from an acid liquid waste in a treatment process thereof;
- Fig. 6 shows a flow-sheet of an apparatus for carrying out the process according to the exemplary embodiment of Fig. 5;
- Fig. 7 shows a block diagram of the step of preparing a mixture to be treated by the process, starting from an acid solution in a process for making an ammonium salt;
- Fig. 8 shows a flow-sheet of an apparatus for carrying out an exemplary embodiment of the process of Figs. 1 or 7, in a continuous version;
- Fig. 9 shows a flow-sheet of an apparatus for carrying out the process of Fig. 10;
- Fig. 10 shows a block diagram of a process, according to an exemplary embodiment of the invention, in which steps are provided of condensing and collecting the ammonium hydroxide produced by the treatment with ammonia;
- Fig. 11 shows a block diagram of a step of regenerating in an exemplary embodiment;
- Fig. 12 shows a block diagram of a process, according to an exemplary embodiment of the invention, in which steps of regenerating and recovering ammonia from ammonium hydroxide are provided;
- Fig. 13 shows a flow-sheet of an apparatus for carrying out the process of Figs. 12 and 11.

Description of preferred exemplary embodiments

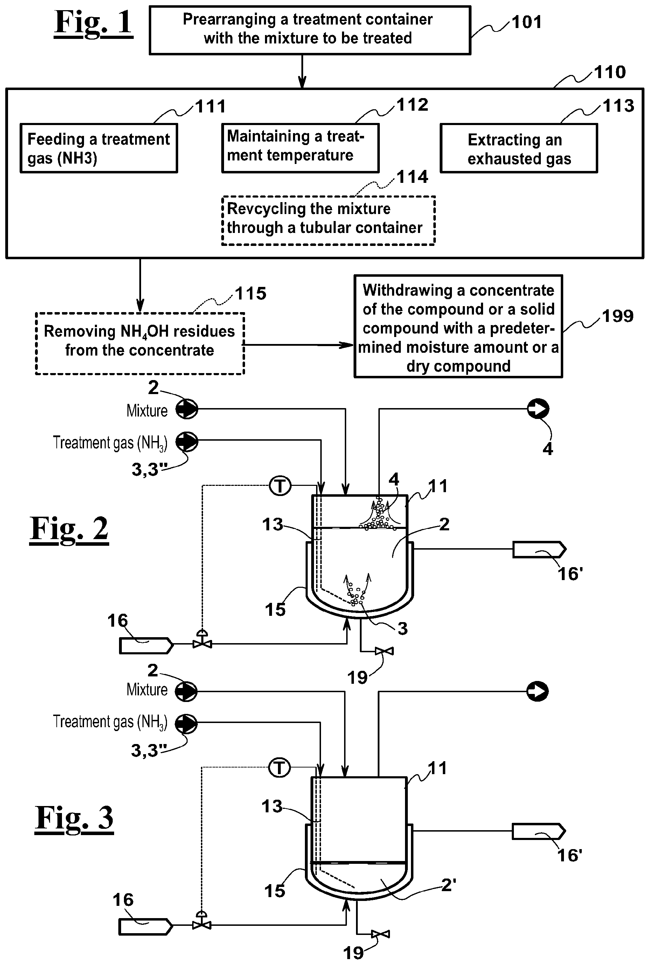

With reference to Figs. 1-4, a process is described for removing water from a mixture 2 containing, besides water, one or more than one solid compounds variously combined and arranged with respect to one another.

After a step 101 of prearranging a treatment container 11, typically a tank, containing mixture 2, a step 110 takes place of removing the water from mixture 2, which provides continuing steps 111, 112 and 113, described hereinafter.

Firstly, a step 111 is carried out of feeding a stream of an ammonia-containing treatment gas 3 into treatment container 11. Feeding 111 of treatment gas 3 can be carried out conventionally, for example, in the case of a globally liquid mixture 2, by a duct 13 immersed in it, which possibly has nozzles or another kind of distribution device, not shown. Feeding 111 is carried out in such a way to assist a contact of treatment gas 3 with the water of mixture 2, in order to cause the water to react with ammonia $NH_3$ according to the reaction

$$NH3(g) + H_2O \text{ (I)} \leftrightarrows NH_4OH \text{ (I)} \qquad [1]$$

thus forming ammonium hydroxide $NH_4OH$ in the liquid state. In the case of a mixture 2 comprising a wet solid, it is advantageously, provided a preliminary step of granulating the mixture, i.e. of reducing it into pieces having a predetermined granulometry, in order to assist the contact.

A step 112 is also provided of heating and then maintaining mixture 2 at a treatment temperature T high enough to cause ammonium hydroxide to distillate. To this purpose, a temperature control device can be provided of container 11, comprising a jacket 15 or an equivalent means. The end-distillation temperature of ammonium hydroxide, in a mixture with water, is about 27°C. A treatment temperature T, even slightly higher than this value, causes ammonium hydroxide to evaporate. For an industrially acceptable speed of the process, treatment temperature T is preferably higher than 40°C, and is advantageously selected in the range from 40°C to 60°C. In order to maintain this temperature, it is sufficient to supply temperature control device 15 with a heating fluid 16 heated or generated by means of a low-enthalpy heat source, not shown, which can be waste heat normally present in an industrial plant. For instance, heating fluid 16 can be condensate water, or vapor at a pressure slightly higher than the atmospheric pressure, or tempered water heated by the latter. Heating fluid 16 can be returned to the heat source as an exhausted heating fluid 16' available for a new work cycle of heating and of heating fluid 16 production.

In these conditions, a step 113 takes place of extracting an exhausted gas stream 4 from treatment container 11. Exhausted gas 4 comprises an amount of treatment gas 3 that has not reacted with water of mixture 2, i.e. unreacted ammonia or another gas possibly present in stream 3, besides the ammonium hydroxide $NH_4OH$ produced by reaction [1], once the latter has been vaporized by maintaining 112 treatment temperature T.

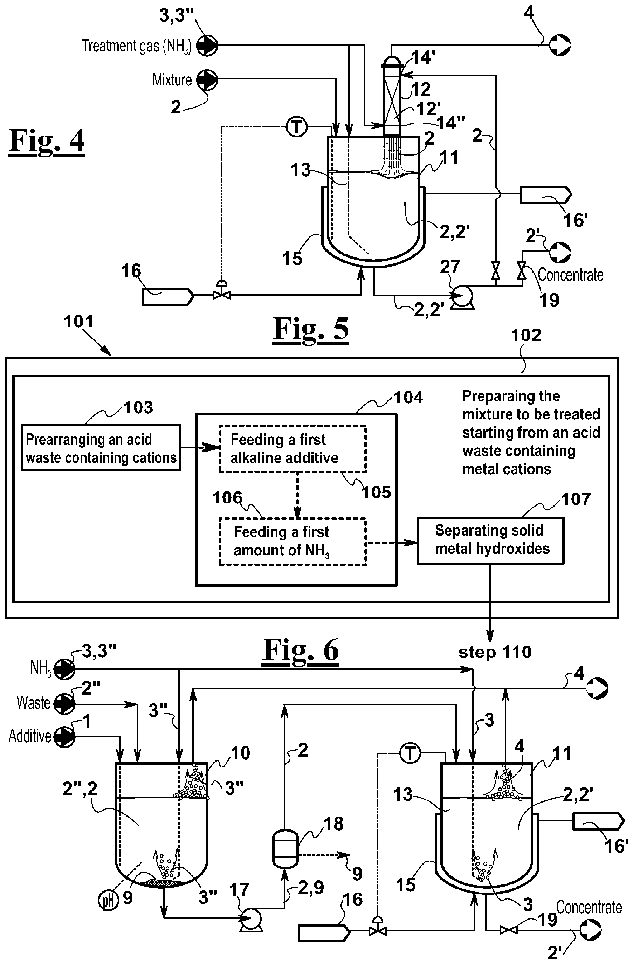

In some cases, for instance when removing water from an alkaline solution, during steps 111, 112, 113 of feeding the treatment gas, maintaining the temperature and extracting exhausted gas 4, a step 114 can be also provided of recycling an amount of mixture 2 from an outlet to an inlet of the tank, through a tubular container 12 (Fig. 4) that is in hydraulic connection with tank 11, and step of feeding 111 is carried out in such a way that treatment gas 3 passes through tubular container 12, preferably in countercurrent with respect to mixture 2 being recycled, in order to provide here a more intimate contact between mixture 2 and gas 3, to which purpose a random or structural package means 12' or even, in a vertical arrangement, a plurality of trays, not shown in tubular container 12 can be advantageously provided.

The dotted edge of box 114 in Fig. 1, of boxes 105,106 in Fig. 5, of box 115 in Figs. 1, 7 and 12 indicates that the steps corresponding to these boxes are optional, i.e. they relates to modifications and exemplary embodiments of the process shown in the respective figures.

As described, feeding 111 of treatment gas 3, maintaining 112 treatment temperature T and then extraction 113 of exhausted gas 4, and preferably step 114 of recycling, are carried out continuously until, by removing water through reaction [1], the mole or weight ratio of water to the compound achieves a predetermined final value lower than the starting value, and a final concentrate 2' of the compound in water (Fig. 3) is formed.

Mixture 2 can be a homogeneous mixture, for example a homogeneous solution of a salt, or a heterogeneous liquid mixture, in which the solid compound is present in the form of a dispersion or of a suspension, or even in the form of a slurry. In particular, the compound can be a salt at a concentration higher than its saturation concentration, or a solid that is not soluble in water.

In the case of a homogeneous solution 2 of a salt at a mole fraction or concentration lower than the saturation value, extraction 113, i.e. removal 110 of water from solution 2, can continue until the salt saturation concentration is exceed, which causes the salt to precipitate. This is the case of a crystallization process in which the process according to the invention is advantageously used, and in which a mechanical separation of the salt crystallized from the water of concentrate 2' (mother liquor) obtained from solution 2 can follow, for example by filtration.

As an alternative, water removal 110 can continue until the mother liquor disappears, so that a wet crystallized solid is left in treatment container 11, in which the liquid phase is present only as imbibition water or, by further continuing water removal 110, water is present substantially only as hydration water of the salt obtained in a possible hydrated form or, in particular, the final ratio of water to solute can be substantially zero, which corresponds to a dry salt or solid.

Once removal 110 of the water from mixture 2-2' has been carried out, a step 115 can be provided of removing an ammonium hydroxide residue from obtained final concentrate 2'. Removal 115 preferably comprises a gas stream treatment of $NH_4OH$, i.e. a step of stripping, for example by air. As an alternative, or in addition, an addition of an alkaline reagent is possible, which causes the gaseous ammonia residue to be converted, in order to remove it more easily. As an alternative, or in addition, a heating step can be provided up to a predetermined purification temperature, for example by boiling concentrate 2', when this is liquid.

Finally, a step 199 is provided of collecting final concentrate 2", by a conventional discharge means 19.

In particular, Fig. 4 shows an apparatus for carrying out water removal 110 by providing above-described step 114 of of recycling an amount of mixture 2 from an outlet to an inlet of tank 11. More in particular, in the depicted exemplary embodiment, tubular container 12 is mounted to tank 11 similarly to a reflux condenser, i.e. in such a way to drop a liquid present in tubular container 12 back into tank 11, and step of recycle 114 comprises a step of pumping mixture 2 from the outlet of tank 11 to an upper end portion 14' of tubular container 12, through a recycle pump 27. During step 111 of feeding, at least one part of treatment gas stream 3 can be supplied at a lower end portion 14" of tubular container 12.

With reference to Figs. 5 and 6, the process according to the invention can be used for treating an industrial waste liquid 2", containing water, an acid, such as sulphuric acid, and metal cations. In this case, prearranging 101 of mixture 2 provides a step 102 of preparing mixture 2 from waste 2".

As shown in Fig. 5, step 102 of starting can provide a step 103 of prearranging liquid waste 2" and a step 104 of alkalizing it by adding an alkaline additive 1,3" to waste 2", so as to bring waste 2" to a final pH value, which is suitable for quantitatively precipitate the cations in the form of solid metal hydroxides 9. The final pH value depends upon the cations that are present, however, it can be advantageously higher than 9.5, more in particular, higher than 10.0, so as to precipitate substantially all the metal cations that are normally present in an acid waste water.

Preparation 102 of the mixture to be treated with the method of the invention from waste 2" also comprises a subsequent step 107 of separating formed solid hydroxides 9 from a liquid that is mixture 2, and that is a homogeneous solution of a salt comprising the cation released by the alkaline reagent into the solution, and of the anion of the acid that is present in the waste. This salt is free from potentially dangerous or useful metals, like those that can be to found in waste 2" in the form of cations.

In an exemplary embodiment, to which still Fig. 5, including dotted boxes, relates more in detail, step 104 of alkalizing comprises a step 105 of adding an alkaline additive that can be a magnesium oxide or a magnesium hydroxide or magnesium carbonate, such that cations $Mg^{2+}$ are formed in treated waste 2". The amount of this magnesium compound is selected in such a way to bring the waste obtain to an intermediate pH value, which is preferably lower than 5.5, in order to avoid that a magnesium oxide/hydroxide/carbonate excess is present along with the precipitated hydroxides.

In this case, preparation 102 is continued with a step 106 of feeding a first amount of ammonia 3" (Fig. 6), in order to exceed the pH value that can be reached by adding MgO or Mg(OH)$_2$ or MgCO$_3$, or a different metal oxide/idroxide, up to a predetermined final pH value. Hydroxide OH- and ammonium NH$_4^+$ ions are also formed in treated waste 2.

Therefore, still in this case, step 107 of separating solid hydroxides 9, provides a mixture 2 that is a homogeneous solution of magnesium sulphate MgSO$_4$ and of ammonium sulphate (NH$_4$)$_2$SO$_4$, and that is free from the metals that are present as cations in waste 2".

As shown in Fig. 6, the step 103 of prearranging waste 2", the step 104 of adding alkaline additive 1, and the step 106 of feeding first ammonia-containing gas stream 3" can be carried out in a pre-treatment container 10, while treatment container 11 receives mixture 2 ready for water removing 110. For example, separation 107 of hydroxides 9 can be carried out in a filter 18 preferably on the delivery side of a pump 17 arranged to convey pre-treated waste 2 from pre-treatment container 10 to treatment container 11. However, in an exemplary embodiment of the method, not shown, preparation step 102 can directly performed in treatment container 11 provided that pump 17 and filter 18 are arranged along a line in turn arranged to withdraw waste 2", from the bottom of container 11, after cation precipitation, and to recycle filtered mixture 2 to the container itself.

In subsequent water removal 110 (Fig. 1), a second ammonia-containing gas stream 3 causes the MgSO$_4$ and (NH$_4$)$_2$SO$_4$ solution to progressively concentrate in treatment container 11, possibly also to precipitate as a mixture of two salts, and even possibly to become a dry solid mixture, not shown.

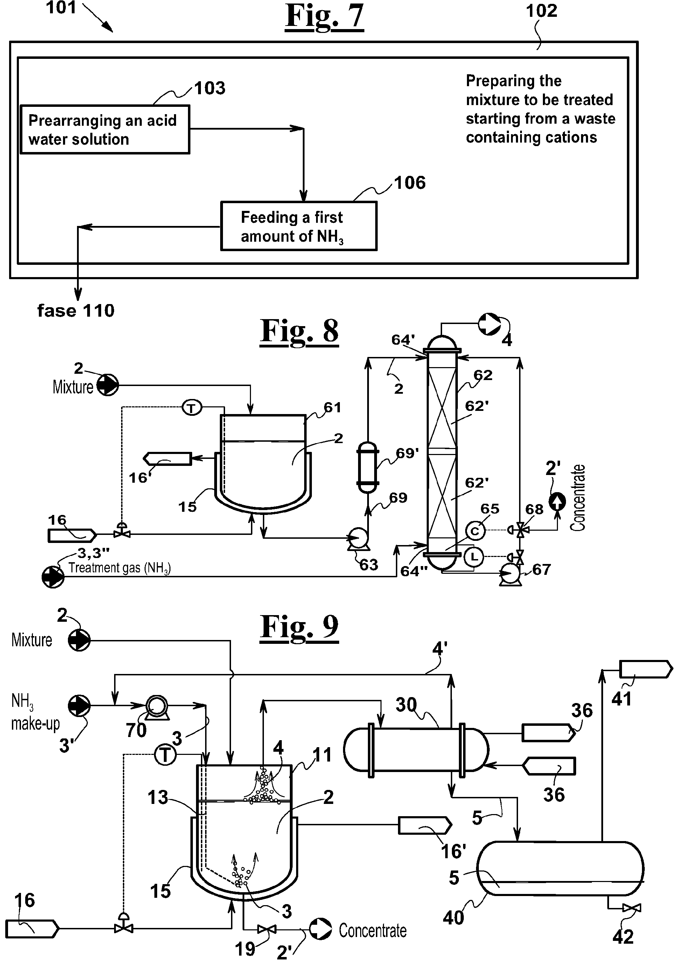

The process according to the invention can be used in a method for obtaining an ammonium salt of a mineral acid, for example ammonium sulphate (NH$_4$)$_2$SO$_4$, starting from a water solution of the corresponding acid, in particular sulphuric acid, and from ammonia 3. Even in this case, step 101 of prearranging mixture 2 to be treated provides a step 102 of preparing mixture 2 starting from the acid solution, for example as shown in Fig. 7.

In particular, after step 103 of prearranging the acid solution, preparation 102 can also in this case comprise a step 106 of feeding a first amount of ammonia 3" to form ammonium ions in the H$_2$SO$_4$ solution, until a mixture 2 is obtained that can be treated by the process according to the invention, and that is a homogeneous (NH$_4$)$_2$SO$_4$ solution. In subsequent water removal 110 (Fig. 1), a second ammonia-containing gas stream causes (NH$_4$)$_2$SO$_4$ solution to progressively concentrate, possibly causes the salt to precipitate and even possibly to be dryied.

Mixture 2 can also have the same consistency as a wet solid, not necessarily a salt, since the beginning. For instance, it can be an industrial mud to be treated, in which water is the dispersed phase, as imbibition water. In these cases, water removal 110 is continued until the mud has a predetermined residual amount of moisture. In an extreme condition, the mud can be obtained in a substantially dry status.

Mixture 2 can also be a true solid, for example a compound as a salt, in which the water is present as hydration water.

Fig. 8 it relates to an exemplary embodiment of the process according to the invention, in which the water removal is carried out continuously in a tubular treatment container, in this case in an absorption column 62, containing a packing material 62', to which mixture 2 to be treated, in this case a liquid, and treatment gas 3 are fed at an upper end portion 64' and at a lower end portion 64", respectively, at which the extraction of exhausted gas 4 and the withdrawal of concentrate 2' are carried out, respectively. Advantageously, the process comprises a step of recycling an amount of concentrate 2', by a pump 67, for example to the top of column 62. This amount can be increased or reduced, by such a means as a three-way valve 68, if a measured concentration provided by a sensor 65 is higher or lower than a predetermined value, respectively. In order to maintain the temperature of the mixture, heat can be supplied to a feed tank 61 and/or to a feed line 69 arranged for feeding column 62, by a heat exchanger 69'.

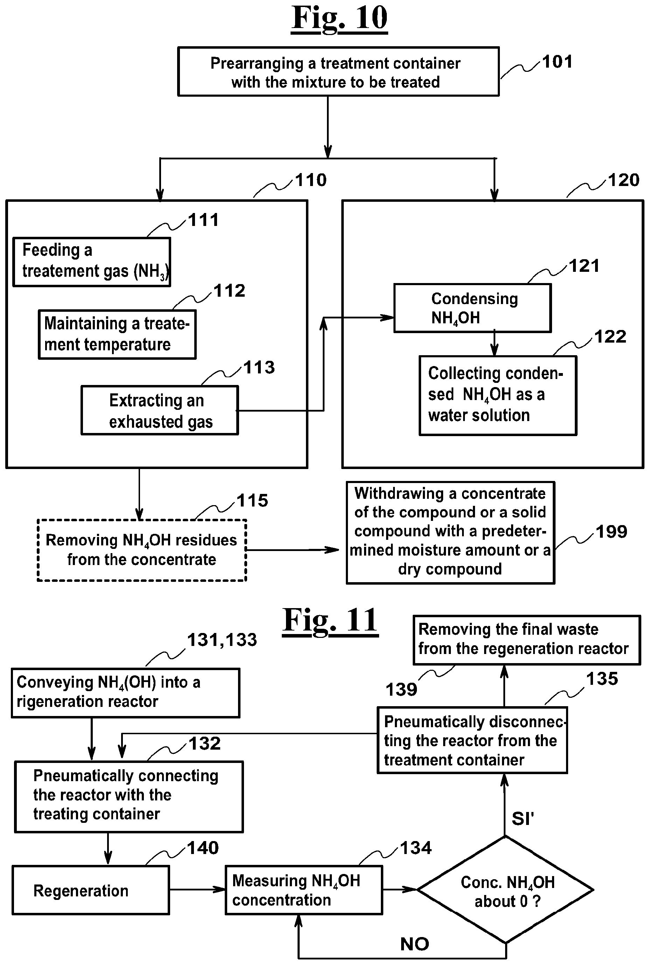

With reference to Figs. 9 and 10, a process is described according to an exemplary embodiment of the invention, in which a step 120 is also provided of treating exhaust gas stream 4. Treatment 120 comprises a step 121 of condensing the ammonium hydroxide contained in exhaust gas stream 4, and a step 122 of collecting the condensed ammonium hydroxide, in the form of a water solution 5.

Condensation 121 of ammonium hydroxide can be carried out in an apparatus 30 of known type, such as a tube-and-shell heat exchanger 30 connected to a circuit supplying a refrigerant fluid 36. Condenser 30 is advantageously configured to treat an amount of non-condensable gas, comprising ammonia excess that is present in treatment gas 3. A corresponding stream 4' of a non-condensable gas is preferably separated from condensed ammonium hydroxide 5 downstream condenser 30, and is conveyed to treatment container 11 as treatment gas 3, possibly after adding a make-up stream 3' set so as to compensate for the ammonia loss due to the reaction, or to physical absorption into liquid ammonium hydroxide 5. A fan 70 is advantageously arranged to convey non-condensable gas stream 4' to treatment container 11.

Step 122 of collecting the condensed ammonium hydroxide is preferably carried out by collecting the liquid into a collection tank 40 of known type that has a vent to a treatment device 41 and has a discharge device 42 for collected condensate 5.

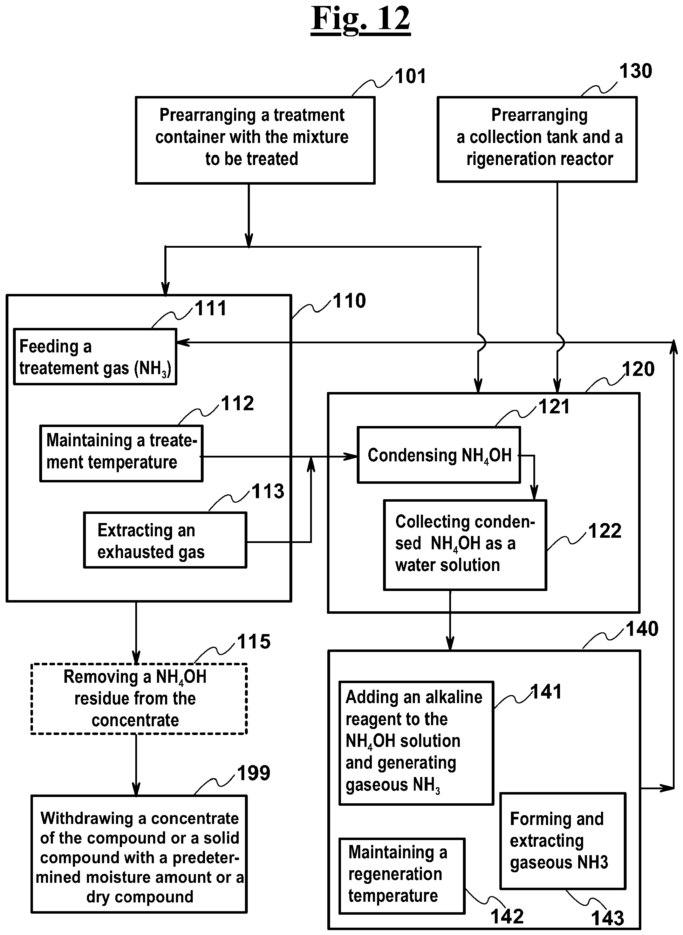

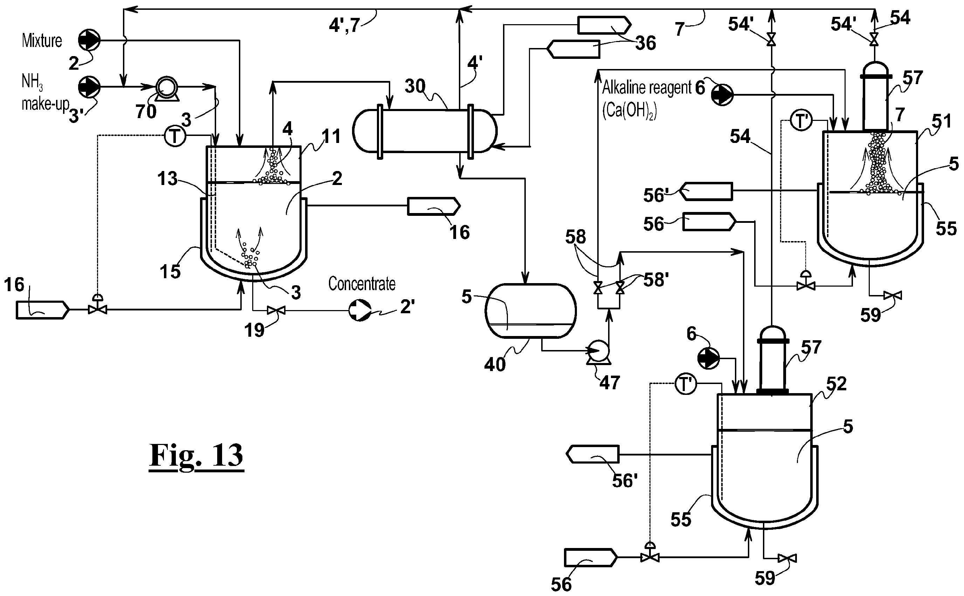

With reference to Figs. 12 and 13, a process is described according to an exemplary embodiment of the invention, wherein a step 140 of regenerating and recovering the gaseous ammonia from condensed ammonium hydroxide 5 is also provided.

Regeneration 140 can comprise a step 141 of adding an alkaline reagent 6, in particular calcium hydroxide $Ca(OH)_2$, for example a 2 g/l $Ca(OH)_2$ water solution, to ammonium hydroxide water solution 5. This causes of the pH of water solution 5 to increase, and the equilibrium reaction:

$$NH3(g) + H_2O\ (I) \leftrightarrows NH_4OH \qquad\qquad (I),$$

to be shifted to the left, thus releasing gaseous ammonia. This process is endothermic. Therefore, a step 142 is provided of maintaining a regeneration temperature T' in ammonium hydroxide water solution 5, wherein water solution 5 receives a thermal power high enough to compensate for the endothermic effect associated with the formation of gaseous ammonia. This can take place in a regeneration reactor 51,52 of known type that has a temperature control device comprising a jacket 55 or an equivalent means.

In an exemplary embodiment, not shown, a step is provided of recovering an amount of heat released during condensation 121 of ammonium hydroxide vapour, and a step of using said heat amount in step 142 of maintaining regeneration temperature T', so as to to minimize energy consumption.

In such conditions, a step 143 takes place of steadily producing regenerated gaseous ammonia 7, and a step of extracting the latter from regeneration reactor 51,52.

Also in this case, temperatures are required non exceeding a maximum value of about 50-60°C, and the thermal control of reactor 51,52 can be carried out by using a low-enthalpy heat source 56, which produces the above-mentioned advantages. Heating fluid 56, for example tempered water, can be returned to the heat source as an exhausted heating fluid 56' available for a new work cycle of heating and of heating fluid 56 production.

Regenerated gaseous ammonia 7 is available for step 111 of feeding treatment container 11, as treatment gas 3, or as a part of it, after mixing it with a fresh or make-up ammonia-containing gas stream 3'. Treatment gas 3 is conveyed towards treatment reactor 11 by a fan, for example fan 70 same that is arranged to convey non-condensable gas stream 4'.

A separation device 57 for vapor 7, such as a distillation column or a condenser 57, can be associated to regeneration reactor 51,52, can be mounted as a reflux condenser to regeneration reactor 51,52, and can have its top section, or another key section, maintained at a predetermined temperature.

According to an exemplary embodiment of the invention, in order to carry out regeneration step 140 a step 130 is provided (Fig. 12) of prearranging:

- collection tank 40 to collect water solution 5 of ammonium hydroxide condensed from exhausted vapor 4;
- a plurality of regeneration reactors, in this case two reactors 51,52 both having respective hydraulic connection lines 58 from collection tank 40, a pump 47 being possibly provided upstream, and respective pneumatic connection lines 54.

Each connection line has shut-off valves 58',54' for selectively connecting each reactor 51,52 with collection tank 40 and with treatment container 11. This way, as indicated in Fig. 11, steps 131 or 133 can be carried out of conveying an amount of ammonium hydroxide water solution 5 from collection tank 40 to reactor 51 or 52, respectively, and then from here, once a pneumatic connection step 132 with treatment container 11 has been performed, step 143 of supplying regenerated ammonia 7 from currently used reactor 51 or 52 to treatment container 11, after alkaline reagents addition 141 and during step 142 of maintaining regeneration temperature in reactor 51 or 52.

During regeneration 140, a step 134 is carried out of measuring ammonium hydroxide concentration of water solution 5 contained in reactor 51 or 52. If this concentration is lower than a maximum admissible concentration value, a step 135 takes place of pneumatically disconnecting currently used reactor 51 or 52, and the above-described procedure is actuated by connecting the other reactor 52 or 51, respectively, into which ammonium hydroxide water solution 5 has been prepared. At that point, a step 139 takes place of removing of the final waste water from previously used reactor 51,52, through a discharge means 59.

The above can be extended in an obvious way to the case of more than two regeneration reactors.

EXAMPLES

*Example 1 - Concentration of a sodium sulphate water solution*

50 Kg of a mixture comprising a 5% sodium sulphate $Na_2SO_4$ water solution was arranged into a treatment container configured as a feeder tank of a distillation apparatus. In the same container, a stream of a pure ammonia-containing treatment gas was caused to bubble, while the mixture treatment temperature was maintained at 60°C.

The gaseous ammonia was generated in situ using two reactors, each initially containing 20 Kg of a 17%

$NH_4OH$ solution and operated alternately to each other, more in detail a 2 g/l $Ca(OH)_2$ solution was added into a first reactor, in order to generate gaseous $NH_3$ by shifting the equilibrium reaction

$$NH3(g) + H_2O (l) \leftrightarrows NH_4OH (l) \qquad [1]$$

to the left due to this addition, after which the upper part of the first reactor was maintained in pneumatic connection with the treatment container by a duct immersed in the mixture to be treated, and the ammonium hydroxide concentration decrease was monitored until decrease and until exhaustion. At that point, the second reactor was operated in a similar way. During the ammonia generation, the two reactors were maintained at a regeneration temperature set between 30 and 40°C, in order to take into account the endothermic effect of ammonia formation.

The ammonia supplied to the treatment container caused the equilibrium reaction

$$NH3(g) + H_2O (l) \leftrightarrows NH_4OH (l) \qquad [1]$$

to shift to the right, i.e. to $NH_4OH$ formation, and also assisted the extraction of the exhaust gas stream from the treatment container, formed from the treatment gas and containing ammonium hydroxide NH4OH vapor. This way, the water was progressively removed from the water solution in the treatment container, thus progressively increasing the sodium sulphate $Na_2SO_4$ concentration or fraction until a predetermined value was reached.

The vapor was condensed, and the condensed was collected in a collection tank. An ammonia excess, which had not been condensed, was sent back to the first or to the second regeneration reactor operated in that moment, in order to minimize the amount of ammonia consumed for the treatment.

When the treated water solution reached a predetermined final sodium sulphate concentration or fraction, the ammonia residue still in the treatment container was withdrawn by means of an air stream, i.e. by stripping, maintaining a temperature of 50°C, in order to quantitatively recover the ammonia for a new work cycle.

At the end of the process, 29 Kg of water had been removed from the solution in the treatment container, thus reaching a sodium sulphate concentration of 12%. In the condensate collection tank, instead, about 35 Kg of an ammonium hydroxide solution were obtained, containing 17% ammonia. This solution remained available as a source of ammonia for repeating the process.

The ammonia-free water obtained in the first regeneration reactor was neutralised up to neutral pH and was caused to pass through a cartridge containing granular activated carbon, in order to remove possible ammonia traces, so as to comply with wastewater discharge regulations. Instead, the content of the second regeneration reactor remained available for a new work cycle, until ammonia exhaustion.

_Example 2 - Application to the treatment of acid waste_

20 litres of an acid waste, density 1.14 g/cm$^3$, containing sulphuric acid and metal cations , with the following concentrations: total sulphates ($SO_4^=$) 170 g/l, iron 8 g/l, aluminium 0.8 g/l, titanium 0.75 g/l and manganese 0.1 g/l, were arranged into a pre-treatment container.

The waste was initially treated with 1.3 Kg of solid magnesium oxide MgO until a pH of 5.5 was attained, neutralizing this way the free sulphuric acid and precipitating one part of the metal cations as hydroxides, but without precipitating the magnesium cations $Mg^{2+}$. Dissolved magnesium sulphate $MgSO_4$ remained in the liquid phase. Afterwards, the pH was increased up to a final value of 10.5 in order to complete metal precipitation, using gaseous ammonia for this purpose, which was caused to bubble directly in the pre-treatment container. The use of gaseous ammonia made it possible to reach a pH higher than what is possible with MgO, without precipitating the magnesium that, as well known, does not precipitate in the presence of ammonium salts. At this point, besides precipitated hydroxides, the pre-treatment container contained not only dissolved magnesium sulphate $MgSO_4$, but also ammonium sulphate $Mg(OH)_2$. The metals precipitated as hydroxides were separated by filtration, obtaining a dry weight of about 330 g.

The mixture consisting of the above described water solution containing the two dissolved compounds $MgSO_4$ and $Mg(OH)_2$ was fed to a treatment container configured as a feeder tank of a distillation apparatus, in which an ammonia-containing gas stream, as treatment gas, was caused to bubble again, in order to completely remove the water and to obtain a solid said mixture.

The gaseous ammonia introduced into the system caused equilibrium reaction [1] to shift to ammonium hydroxide $NH_4OH$ formation, and also assisted to extract from the treatment container the exhaust gas stream formed from the treatment gas and containing ammonium hydroxide $NH_4OH$ vapor. The system was maintained at a treatment temperature of 50°C, in order to further speed-up the ammonium hydroxide distillation.

The gaseous ammonia was generated in situ using two reactors operated alternately to each other as described in example 1, each initially containing in this case 12 Kg of a 17% ammonia solution also including calcium hydroxide $Ca(OH)_2$ at a 2 g/l concentration, fed at the beginning of the respective work cycle.

The process was continued until removing substantially all the water of the initial magnesium sulphate and ammonium sulphate solution. In other words, the overall concentration, or overall fraction of the two compounds $MgSO_4$ and $Mg(OH)_2$ in the solution or a mixture contained in the treatment container was caused to progressively increase until it reached the predetermined value, in this case an overall fraction substantially equal to 1, i.e. until obtaining a solid mixture of magnesium sulphate heptahydrate $MgSO_4 \cdot 7H_2O$ and ammonium sulphate $Mg(OH)_2$.

The ammonium hydroxide vapor was condensed and recovered in a collection tank. An ammonia excess, not condensed, was sent back to the first or to the second regeneration reactor operated in that moment, in order to minimize the amount of ammonia consumed for the treatment.

In order to eliminate the ammonia residual and convert all the ammonium sulphate $(NH_4)_2SO_4$ into magnesium sulphate $MgSO_4$, the solids were mixed with 400g of a 30% magnesium oxide MgO slurry. Moreover, in order to further assist the ammonia removal, air was caused to bubble at the same time, maintaining a temperature of 50°C until ammonia exhaustion.

At the end of the process, about 8.7 Kg of solid magnesium sulphate heptahydrate $MgSO_4 \cdot 7H_2O$ were left in the treatment container. In the condensate collection tank, instead, about 17 kg of a 17% ammonium hydroxide solution were obtained. This solution could be used again as a source of ammonia for repeating the process.

The ammonia-free water obtained in the first regeneration reactor was treated as described in example 1, while the content of the second regeneration reactor remained available for a new work cycle.

*Example 3 - Preparing solid ammonium sulphate*

15 Kg of a 20% w/w sulphuric acid solution were arranged into a treatment container configured as a feeder tank of a distillation apparatus, where gaseous ammonia was caused to bubble.

The gaseous ammonia was generated in situ using two reactors operated alternately to each other as described in example 1, each initially containing in this case 12 Kg of a 17% ammonia solution also including calcium hydroxide $Ca(OH)_2$ at a 2 g/l concentration, fed at the beginning of the respective work cycle.

During the ammonia generation, the two reactors were maintained at a regeneration temperature 40°C in order to take into account the endothermic effect of ammonia formation.

Initially, the ammonia supplied to the treatment container reacts with the sulphuric acid forming a 25% w/w ammonium sulphate solution. At this point, the temperature was maintained at about 50°C while still feeding gaseous ammonia which, as in previous examples, caused equilibrium reaction [1] to shift to ammonium hydroxide $NH_4OH$ formation and also assisted the stripping of the formed vapor. The vapor was condensed and its condensate was recovered in a collection tank, while an ammonia excess, which had not been condensed, was sent back to the first or to the second regeneration reactor operated in that moment, in order to minimize the amount of ammonia consumed for the treatment.

Once water had been removed from the starting solution, the ammonia residue still in the treatment container was in turn removed by stripping, i.e. by means of an air stream, still maintaining the temperature of 50°C.

At the end of the process, about 4 kg of solid ammonium sulphate were left in the treatment container, while about 14.5 Kg of an ammonium hydroxide solution containing 17% ammonia were obtained in the condensate collection tank. This solution remained available as a source of ammonia for repeating the process.

The ammonia-free water obtained in the first regeneration reactor was treated as described in example 1, while the content of the second regeneration reactor remained available for a new work cycle.

*Example 4 - Drying a sludge*

15 kg of a mineral sludge were arranged in a first container supply unit of a distillation apparatus. The sludge, at an 80% moisture content, had been preliminarily granulated before drying it. To this purpose, a gaseous ammonia stream was brought into contact with the wet sludge, so as to establish an equilibrium between ammonia and water according to reaction [1]. As ammonium hydroxide was formed, it distilled and was easily removed, due to the dragging (stripping) effect of gaseous ammonia.

The gaseous ammonia was generated in situ using two reactors operated alternately to each other as described in example 1, each initially containing in this case 10 Kg of a 17% ammonia solution also including calcium hydroxide $Ca(OH)_2$ at a 2 g/l concentration, fed at the beginning of the respective work cycle.

During the ammonia generation, the two reactors were maintained at a regeneration temperature 30°C, in order to take into account the endothermic effect of ammonia formation.

The process was continued until the sludge was substantially dry.

the distilled vapor was condensed and its condensate was recovered in a collection tank, while the gaseous ammonia excess was sent back to the first or to the second regeneration reactor operated in that moment, in order to minimize the amount of ammonia consumed for the treatment.

Once concluded the drying step, the ammonia residue in the sludge remaining in the treatment container was withdrawn by means of an air stream, i.e. by stripping it into air, maintaining a temperature of 50°C, in order to quantitatively recover the ammonia for a new work cycle.

At the end of the process, about 3 Kg of mud dry were left in the treatment container, while about 14.5 kg of an ammonium hydroxide solution containing 17% ammonia were recovered in the condensate collection tank. This solution remained available as a source of ammonia for repeating the process.

The ammonia-free water obtained in the first regeneration reactor was treated as described in example 1, while the content of the second regeneration reactor remained available for a new work cycle.

*Example 5 - Concentration of a polyphenol water solution*

50 Kg of a mixture comprising a 0.5% polyphenol water solution were arranged into a treatment container configured as a feeder tank of a distillation apparatus. In the same container, a stream of a pure ammonia-containing treatment gas was caused to bubble, while the mixture treatment temperature was maintained at 50°C.

The gaseous ammonia was generated in situ, using two reactors, each initially containing 30 Kg of a 17% ammonia solution also including calcium hydroxide $Ca(OH)_2$ at a 2 g/l concentration, fed at the beginning of the respective work cycle. During the ammonia generation, the two reactors were maintained at a regeneration temperature set between 30 and 40°C, in order to take into account the endothermic effect of ammonia formation.

The ammonia supplied to the treatment container caused the equilibrium reaction

$$NH_3(g) + H_2O\ (l) \leftrightarrows NH_4OH\ (l) \qquad\qquad [1]$$

to shift to the right, i.e. to $NH_4OH$ formation, and also assisted the extraction of the exhaust gas stream from the treatment container, formed from the treatment gas and containing ammonium hydroxide NH4OH vapor. This way, the water was progressively removed from the water solution in the treatment container, thus progressively increasing the polyphenol concentration or fraction until a predetermined value was reached.

The vapor was condensed, and its condensate was collected in a collection tank. An ammonia excess, which had not been condensed, was sent back to the first or to the second regeneration reactor operated in that moment, in order to minimize the amount of ammonia consumed for the treatment.

When the treated water solution reached a predetermined final polyphenol concentration or fraction, the ammonia residue still in the treatment container was removed by stripping it into a nitrogen stream, to prevent polyphenol oxidization, maintaining a temperature of 50°C, in order to quantitatively recover the ammonia for a new work cycle.

At the end of the process, 45 Kg of water had been removed from the solution in the treatment container, thus reaching a in polyphenol concentration of 5 %, while about 54.2 Kg of an ammonium hydroxide solution containing 17% ammonia were obtained in the condensate collection tank. This solution remained available as a source of ammonia for repeating the process.

The ammonia-free water obtained in the first regeneration reactor was neutralised up to neutral pH and was caused to pass through a cartridge containing granular activated carbon, in order to remove possible ammonia traces, so as to comply with wastewater discharge regulations. Instead, the content of the second regeneration reactor remained available for a new work cycle, until ammonia exhaustion.

*Example 6 - Concentration of a sodium hydroxide solution*

50 Kg of a mixture comprising a water sodium hydroxide solution (NaOH) to 30% were arranged in a feeder tank of a distillation apparatus that has a packed column at the beginning of its vent line. The packed column was connected to the reactor, so as to allow a liquid contained in the column to fall back into the tank. A recycle line comprising a pump was also arranged between a discharge outlet of the tank and the top of the packed column.

Maintaining the temperature of the mixture at 50°C, the recycle pump was operated and, at the same time, a stream of a pure ammonia-containing treatment gas was supplied to a lower portion of the packed column. This way, the NaOH solution and the treatment gas countercurrently flowed through the packed column, the packing material therein increasing the contact surface and causing the interphase mass-exchange coefficient to increase as well, with respect to the case in which the gas is bubbled into the tank. The reaction took In place in the column:

$$NH_3(g) + H_2O\ (l) \leftrightarrows NH_4OH\ (l) \qquad\qquad [1]$$

This way, the water was progressively removed from the solution flowing through the column, and the solution that fell back into the tank had a concentration higher than the solution fed to the top of the column. Moreover, the treatment gas flow assisted extracting from the column an exhaust gas stream containing ammonium hydroxide $NH_4OH$ vapor.

Therefore, the concentration of sodium hydroxide NaOH in the solution contained in the tank increased progressively, until a predetermined value was reached.

This improvement was necessary to take into account the strong alkalinity of the NaOH solution, which would have caused the equilibrium reaction:

$$NH_3(g) + H_2O\ (l) \leftrightarrows NH_4OH\ (l) \qquad\qquad [1]$$

to shift to the left, and would have caused the ammonia to leave the liquid without reacting with the water.

The gaseous ammonia was generated in situ using two reactors, each initially containing 15 Kg of a 17% ammonium hydroxide solution $NH_4OH$, to which calcium hydroxide $Ca(OH)_2$ was added so as to attain concentration of 2 g/l, at the beginning of the respective work cycle of each reactor.

During ammonia generation, the two reactors were maintained at a regeneration temperature set between 30 and 40°C, in order to take into account the endothermic effect of ammonia formation.

The vapor was condensed, and its condensed was collected into a collection tank. An ammonia excess, which had not been condensed, was sent back to the first or to the second regeneration reactor that was operated in that moment, in order to minimize the amount of ammonia consumed for the treatment.

When the treated water solution, contained in the tank, reached a predetermined final concentration or fraction of sodium hydroxide, the ammonia residual system was removed by an air stream, in order to quantitatively recover the ammonia for a new work cycle.

At the end of the process, 20 Kg of water had been removed from the solution in the treatment container, thus reaching a sodium hydroxide concentration of 50%, while 24 Kg of an ammonium hydroxide solution, containing 17% ammonia had been collected the condensate collection tank. This solution remained available as a source of ammonia for repeating the process.

The ammonia-free water obtained in the first regeneration reactor was neutralized up to neutral pH and was caused to pass through a cartridge containing granular activated carbon, in order to remove possible ammonia traces, so as to comply with wastewater discharge regulations. Instead, the content of the second regeneration reactor remained available for a new work cycle, until ammonia exhaustion.

The foregoing description exemplary embodiments and examples specific of the invention will so fully reveal the invention according to the conceptual point of view, so that others, by applying stream knowledge, will be able to modify and/or adapt for various applications such embodiment without further research and without parting from the scope of the claims, and, accordingly, it is therefore to be understood that such adaptations and modifications will have to be considered as equivalent to the specific embodiment and to the examples. The means and the materials to put into practice the different functions described herein could have a different nature without, for this reason, departing from the scope of the claims. It is to be understood that the phraseology or terminology that is employed herein is for the purpose of description and not of limitation.

**Claims**

1. A process for removing water from a mixture (2) containing water and a compound, said mixture (2) at an initial ratio between said water and said compound, said process comprising the steps of:

   - prearranging (101) a treatment container (11) in which said mixture (2) is present;
   - feeding (111) a stream of a treatment gas (3) containing ammonia into said treatment container (11), and causing said treatment gas (3) to contact said mixture (2), in such a way that a part of said ammonia reacts with said water of said mixture (2), forming ammonium hydroxide;
   - maintaining (112) said mixture (2) at a treatment temperature higher than 27°C, at which said ammonium hydroxide is in a gaseous state,
   - extracting (113) an exhausted gas stream (4) from said treatment container (11), said stream comprising said ammonium hydroxide and an unreacted treatment gas (3),

   so as to progressively remove water from said mixture (2) while said stream of said treatment gas (3) is supplied, and said exhaust gas stream (4) is extracted in/from said treatment container (11), and therefore said mixture (2) containing said compound is concentrated:

   - continuing (110) said feeding (111), maintaining (112) and extracting (113) steps at least until a final concentrate (2') of said compound is obtained at a predetermined final ratio between said water and said compound.

2. A process according to claim 1, wherein said compound is a salt having a saturation concentration in water, said mixture (2) is a homogeneous solution of said salt and said step of extracting (113) is continued until a concentration of said salt is reached higher than said saturation concentration, in order to crystallize said salt in said treatment container.

3. A process according to claim 1, wherein said feeding (111), maintaining (112) and extracting (113) steps are continued until a predetermined amount of moisture is left in said compound (8), in particular until said compound (8) is substantially dry.

4. A process according to claim 1, wherein:

   - said treatment container comprises a tank (11) and said step of extracting (113) is carried out through a vent line (21) in hydraulic connection with said tank (11);
   - a further tubular container (12) is arranged along said vent line (21), said further tubular container comprising internal contact-promoting members (12') to promote a contact between a liquid phase and a gaseous phase,
   - during said steps of feeding (111), maintaining (112) and extracting (113), a step of recycling (114) an amount of said mixture (2) is carried out, between an outlet and an inlet of said tank (11) through said tubular container (12).

5. A process according to claim 4, wherein said tubular container (12) is mounted to said tank (11) similarly to a reflux condenser, i.e. in such a way that a liquid present in said tubular container (12) falls back into said tank (11), and said step of recycling (114) comprises a step of pumping said mixture (2) from said outlet of the tank (11) to an upper end portion (14') of said tubular container (12).

6. A process according to claim 4, wherein at least one part of said stream of said treatment gas (3) is supplied at a lower end portion (14") of said tubular container (12), in said step of feeding (111).

7. A process according to claim 1, wherein said mixture (2) comprises a wet solid, in particular a waste mud from an industrial process, wherein said water is an imbibition water of said compound.

8. A process according to claim 1, wherein said step of prearranging (101) comprises a step of preparing (102) said mixture (2) comprising the steps of:

   - prearranging (103) a liquid waste (2"), said liquid waste (2) containing water, an acid and cations of a metal, and having an initial pH value;
   - adding (104) an alkaline additive (1,3") to said liquid waste (2"), until a predetermined final pH value is reached in said liquid waste (2"), in order to cause said cations to precipitate as solid metal hydroxides, said alkaline additive forming its own dissolved ions;
   - separating (107) said solid metal hydroxides (9) from said liquid waste (2") and obtaining said mixture to be treated consisting of a homogeneous solution (2) of said compound comprising a salt of said ions of said alkaline additive and of an anion of said acid.

9. A process according to claim 8, wherein said step of adding (104) said alkaline additive comprises:

   - a step of adding (105) an amount of a first alkaline additive (1) selected from the group consisting of magnesium oxide MgO, magnesium hydroxide $Mg(OH)_2$ and magnesium carbonate $MgCO_3$, said amount of said first alkaline additive (1) selected in such a way to reach an intermediate pH value in said liquid waste (2") lower than 5.5, in order to cause a first portion of said cations to precipitate as solid metal hydroxides;
   - a step of feeding (106) a second alkaline additive comprising a first amount of ammonia (3") into said liquid waste (2"), until said final pH value is reached in said liquid waste (2"), in order to cause a second residual amount of said cations to precipitate as solid metal hydroxides,
   wherein said step of separating (107) provides said mixture to be treated consisting of a homogeneous solution (2) of said compound comprising a first salt of said ions of said alkaline additive and a second ammonium salt, said first and second salt comprising a same anion of said acid.

10. A process according to claim 8 or 9, wherein said acid is sulphuric acid and said salt is a sulphate, or said first and second salt are sulphates.

**11.** A process according to claim 1, wherein said step of prearranging (101) comprises a step of preparing (102) said mixture (2), comprising the steps of:

- prearranging (103) a water solution (2) of a mineral acid;
- feeding (106) a first amount of ammonia (3") into said solution (2) of a mineral acid, forming ammonium ions in said solution (2), until a predetermined concentration of an ammonium salt of said mineral acid is reached and obtaining said mixture (2) consisting of a homogeneous solution (2) of said compound comprising said ammonium salt.

**12.** A process according to claim 1, wherein said treatment temperature is selected in the range from 40°C to 60°C.

**13.** A process according to claim 1, wherein steps are provided of condensing (121) ammonium hydroxide (5) from said exhaust gas stream (3), and of collecting (122) said condensed ammonium hydroxide in the form of a water solution (5).

**14.** A process according to claim 1, in which are provided of regenerating (140) and recovering gaseous ammonia starting from said condensed ammonium hydroxide (5), said step of regenerating (140) comprising the steps of:

- adding (141) an alkaline reagent (6), in particular calcium hydroxide $Ca(OH)_2$, to said water solution (5) of said ammonium hydroxide, in order to increase the pH value of said water solution (5), and releasing regenerated gaseous ammonia (7) from said water solution (5), transforming said water solution into a final waste water;
- maintaining (142) a regeneration temperature in said water solution (5) of said ammonium hydroxide;
- feeding (143) said regenerated gaseous ammonia (7) along with said stream of said treatment gas (3), to said treatment container (11).

**15.** A process according to claims 13 and 14, wherein a step is provided (130) of prearranging:

- a collection tank (40) arranged for receiving said water solution (5) of said ammonium hydroxide;
- at least two regeneration reactors (51,52), each configured to be selectively brought into hydraulic connection with said collection tank (40), so as to receive said water solution (5) of said ammonium hydroxide and configured to be selectively brought into pneumatic connection with said treatment container (11), so as to selectively transfer vapours generated by said regeneration reactors (51,52) into said treatment container (11);

wherein further steps are provided of:

- conveying (131) an amount of said water solution (5) of said ammonium hydroxide from said collection tank (40) to a determined reactor (51) of said at least two regeneration reactors (51,52);
- pneumatically connecting (132) said determined reactor (51) to said treatment container (11),
said steps of:

    - adding (141) said alkaline reagent(6);
    - maintaining (142) said regeneration temperature;
    - feeding (143) said regenerated gaseous ammonia (7),
    carried out within/ starting from said determined reactor (51);

- conveying (133) a further amount of said water solution (5) of said ammonium hydroxide from said collection tank (40) to another reactor (52) of said at least two regeneration reactors (51,52) distinct from said determined reactor (51);
- measuring (134) an ammonium hydroxide concentration of said water solution contained in said determined reactor (51) during said step of feeding (143) said regenerated gaseous ammonia (7) to said treatment container (11);
- if said ammonium hydroxide concentration is lower than a admissible maximum value, pneumatically disconnecting (135) said determined reactor (51) from said treatment container (11);
are alternately carried out with or are followed by corresponding steps (132'-135) in which said other reactor (52) is replaced with said determined reactor (51) or with a further reactor of said at least two regeneration reactors (51,52) distinct from said determined reactor (51) and from said other reactor (52), and said determined reactor (51) is replaced with said other reactor (52),
wherein a step is also provided of

- removing (139) said final waste water from said determined reactor (51) or from said other reactor (52) or from said further reactor after said step of pneumatically disconnecting (135) and before said step of pneumatically connecting (132) said treatment container (11).

**Patentansprüche**

1. Verfahren zum Entfernen von Wasser aus einem Gemisch (2), das Wasser und eine Verbindung enthält, wobei das Gemisch (2) ein Ausgangsverhältnis zwischen dem Wasser und der Verbindung aufweist, wobei das Verfahren die folgenden Schritte umfasst:

   - Vorbereiten (101) eines Behandlungsbehälters (11), in dem sich das Gemisch (2) befindet;
   - Zuführen (111) eines Ammoniak enthaltenden Stroms von Behandlungsgas (3) in den Behandlungsbehälter (11) und Bewirken eines Kontakts zwischen dem Behandlungsgas (3) und dem Gemisch (2), so dass das Ammoniak mit dem Wasser des Gemischs (2) reagiert, um Ammoniumhydroxid zu bilden;
   - Halten (112) des Gemischs (2) auf einer Behandlungstemperatur von über 27 °C, auf welcher sich das Ammoniumhydroxid in einem gasförmigen Zustand befindet;
   - Extrahieren (113) eines ausgestoßenen Gasstroms (4) aus dem Behandlungsbehälter (11), wobei der Strom das Ammoniumhydroxid und ein unreagiertes Behandlungsgas (3) umfasst,
   um progressiv Wasser aus dem Gemisch (2) zu entfernen, während der Strom des Behandlungsgases (3) zugeführt wird, und wobei der ausgestoßene Gasstrom (4) in/aus dem Behandlungsbehälter (11) extrahiert wird, und wobei das Gemisch (2), das die Verbindung enthält, somit konzentriert wird;
   - Fortsetzen (110) der Schritte des Zuführens (111), des Haltens (112) und des Extrahierens (113), bis wenigstens ein finales Konzentrat (2') der Verbindung mit einem vorbestimmten finalen Verhältnis zwischen dem Wasser und der Verbindung erhalten wird.

2. Verfahren nach Anspruch 1, wobei die Verbindung ein Salz mit einer Sättigungskonzentration in Wasser ist, wobei das Gemisch (2) eine homogene Lösung des Salzes ist, und wobei er Schritt des Extrahierens (113) fortgesetzt wird, bis eine Konzentration des Salzes erreicht wird, die höher ist als die Sättigungskonzentration, um das Salz in dem Behandlungsbehälter zu kristallisieren.

3. Verfahren nach Anspruch 1, wobei die Schritte des Zuführens (111), des Haltens (112) und des Extrahierens (113) fortgesetzt werden, bis eine vorbestimmte Feuchtigkeitsmenge in der Verbindung (8) verblieben ist, im Besonderen, bis die Verbindung (8) im Wesentlichen trocken ist.

4. Verfahren nach Anspruch 1, wobei:

   - der Behandlungsbehälter einen Tank (11) umfasst, und wobei der Schritt des Extrahierens (113) über eine Entgasungsleitung (21) durchgeführt wird, die eine hydraulische Verbindung mit dem Tank (11) aufweist;
   - ein weiterer röhrenförmiger Behälter (12) entlang der Entgasungsleitung (21) angeordnet ist, wobei der weitere röhrenförmige Behälter innere kontaktfördernde Elemente (12') zur Förderung eines Kontakts zwischen einer flüssigen Phase und einer gasförmigen Phase umfasst;
   - während den Schritten des Zuführens (111), des Haltens (112) und des Extrahierens (113) ein Schritt des Rückführens (114) einer Menge des Gemischs (2) zwischen einem Auslass und einem Einlass des Tanks (11) durch den röhrenförmigen Behälter (12) ausgeführt wird.

5. Verfahren nach Anspruch 4, wobei der röhrenförmige Behälter (12) ähnlich einem Rückflusskühler an dem Tank (11) montiert ist, d.h. so dass eine sich in dem röhrenförmigen Behälter (12) befindende Flüssigkeit zurück in den Tank (11) fällt, und wobei der Schritt des Rückführens (114) einen Schritt des Pumpens des Gemischs (2) von dem Auslass des Tanks (11) zu einem oberen Endstück (14') des röhrenförmigen Behälters (12) umfasst.

6. Verfahren nach Anspruch 4, wobei wenigstens ein Teil des Stroms des Behandlungsgases (3) in dem Schritt des Zuführens (111) an einem unteren Endstück (14") des röhrenförmigen Behälters (12) zugeführt wird.

7. Verfahren nach Anspruch 1, wobei das Gemisch (2) einen feuchten Feststoff umfasst, insbesondere Abfallschlamm eines industriellen Verfahrens, wobei das Wasser ein Sättigungswasser der Verbindung ist.

8. Verfahren nach Anspruch 1, wobei der Schritt des Vorbereitens (101) einen Schritt des Erzeugens (102) des Gemischs (2) umfasst, der die folgenden Schritte umfasst:

- Vorbereiten (103) eines flüssigen Abfalls (2"), wobei der flüssige Abfall (2) Wasser, eine Säure und Kationen eines Metalls umfasst und einen anfänglichen pH-Wert aufweist;
- Zugeben (104) eines alkalischen Zusatzstoffes (1,3") zu dem flüssigen Abfall (2"), bis ein vorbestimmter finaler pH-Wert in dem flüssigen Abfall (2") erreicht ist, um zu bewirken, dass die Kationen aus feste Metallhydroxide präzipitieren, wobei der alkalische Zusatzstoff seine eigenen aufgelösten Ionen bildet;
- Abscheiden (107) der festen Metallhydroxide (9) von dem flüssigen Abfall (2") und Erhalten des zu behandelnden Gemischs, das aus einer homogenen Lösung (2) der Verbindung besteht, die ein Salz der Ionen des alkalischen Zusatzstoffs und ein Anion der Säure umfasst.

9. Verfahren nach Anspruch 8, wobei der Schritt des Zugebens (104) des alkalischen Zusatzstoffs folgendes umfasst:

- einen Schritt des Zugebens (105) einer Menge eines ersten alkalischen Zusatzstoffs (1), der ausgewählt ist aus der Gruppe bestehend aus Magnesiumoxid MgO, Magnesiumhydroxid Mg(OH)$_2$ und Magnesiumcarbonat MgCO$_3$, wobei die Menge des ersten alkalischen Zusatzstoffs (1) so ausgewählt wird, dass ein erster intermediärer pH-Wert in dem flüssigen Abfall (2") von unter 5,5 erreicht wird, um zu bewirken, dass ein erster Teil der Kationen als feste Metallhydroxide präzipitiert;
- einen Schritt des Zuführens (106) eines zweiten alkalischen Zusatzstoffs, der eine erste Menge Ammoniak (3") umfasst, in den flüssigen Abfall (2"), bis der finale pH-Wert in dem flüssigen Abfall (2") erreicht ist, um zu bewirken, dass eine zweite Restmenge der Kationen als feste Metallhydroxide präzipitiert;
wobei der Schritt des Abscheidens (107) das zu behandelnde Gemisch bereitstellt, das aus einer homogenen Lösung (2) der Verbindung besteht, welche ein erstes Salz der Ionen des alkalischen Zusatzstoffs und ein zweites Ammoniumsalz umfasst, wobei das erste und das zweite Salz ein gleiches Anion der Säure umfassen.

10. Verfahren nach Anspruch 8 oder 9, wobei die Säure Schwefelsäure ist, und wobei das Salz ein Sulfat ist, oder wobei das erste und das zweite Salz Sulfate sind.

11. Verfahren nach Anspruch 1, wobei der Schritt des Vorbereitens (101) einen Schritt des Erzeugens (102) des Gemischs (2) umfasst, der die folgenden Schritte umfasst:

- Vorbereiten (103) einer Wasserlösung (2) aus einer Mineralsäure;
- Zuführen (106) einer ersten Menge Ammoniak (3") in die Lösung (2) aus einer Mineralsäure, so dass Ammoniumionen in der Lösung (2) gebildet werden, bis eine vorbestimmte Konzentration aus einem Ammoniumsalz der Mineralsäure erreicht ist, und Erhalten des Gemischs (2), das aus einer homogenen Lösung (2) der das Ammoniumsalz umfassenden Verbindung besteht.

12. Verfahren nach Anspruch 1, wobei die Behandlungstemperatur im Bereich von 40 °C bis 60 °C ausgewählt wird.

13. Verfahren nach Anspruch 1, wobei die Schritte des Kondensierens (121) von Ammoniumhydroxid (5) aus dem ausgestoßenen Gasstrom (3) und des Sammelns (122) des kondensierten Ammoniumhydroxids in Form einer Wasserlösung (5) bereitgestellt werden.

14. Verfahren nach Anspruch 1, welches das Regenerieren (140) und Rückgewinnen von gasförmigem Ammonium ausgehend von dem kondensierten Ammoniumhydroxid (5) bereitstellt, wobei der Schritt des Regenerierens (140) die folgenden Schritte umfasst:

- Zugeben (141) eines alkalischen Reagens (6), im Besonderen Calciumhydroxid Ca(OH)$_2$, zu der Wasserlösung (5) aus Ammoniumhydroxid, um den pH-Wert der Wasserlösung (5) zu erhöhen, und Freisetzen von regeneriertem gasförmigem Ammoniak (7) aus der Wasserlösung (5), wodurch die Wasserlösung in finales Abwasser transformiert wird;
- Aufrechterhalten (142) einer Regenerationstemperatur in der Wasserlösung (5) aus Ammoniumhydroxid;
- Zuführen (143) des regenerierten gasförmigen Ammoniaks (7) gemeinsam mit dem Strom des Behandlungsgases (3) in den Behandlungsbehälter (11).

15. Verfahren gemäß den Ansprüchen 13 und 14, wobei ein Schritt (130) des Vorbereitens von folgendem bereitgestellt ist:

- eines Sammeltanks (40), der zur Aufnahme der Wasserlösung (5) aus Ammoniumhydroxid angeordnet ist;
- mindestens zwei Regenerationsreaktoren (51,52), die jeweils so gestaltet sind, dass sie selektiv in hydraulische Verbindung mit dem Sammeltank (40) gebracht werden können, um die Wasserlösung (5) aus Ammoniumhydroxid aufzunehmen, und wobei sie so gestaltet sind, dass sie selektiv in pneumatische Verbindung mit dem Behandlungsbehälter (11) gebracht werden können, um durch die Regenerationsreaktoren (51,52) erzeugte Dämpfe selektiv in den Behandlungsbehälter (11) zu übertragen;

wobei ferner die folgenden Schritte bereitgestellt werden:

- Befördern (131) einer Menge der Wasserlösung (5) aus Ammoniumhydroxid aus dem Sammeltank (40) zu einem bestimmten Reaktor (51) der mindestens zwei Regenerationsreaktoren (51,52);
- pneumatisches Verbinden (132) des bestimmten Reaktors (51) mit dem Behandlungsbehälter (11);
wobei die Schritte:

    - des Zugebens (141) des alkalischen Reagens (6);
    - des Aufrechterhaltens (142) der Regenerationstemperatur;
    - des Zuführens (143) des regenerierten gasförmigen Ammoniaks (7) in/ausgehend von dem bestimmten Reaktor (51) ausgeführt werden;

- Befördern (133) einer weiteren Menge der Wasserlösung (5) aus Ammoniumhydroxid aus dem Sammeltank (40) zu einem anderen Reaktor (52) der mindestens zwei Regenerationsreaktoren (51,52), der sich von dem bestimmten Reaktor (51) unterscheidet;
- Messen (134) einer Ammoniumhydroxidkonzentration der sich in dem bestimmten Reaktor (51) befindenden Wasserlösung während dem Schritt des Zuführens (143) des regenerierten gasförmigen Ammoniaks (7) in den Behandlungsbehälter (11);
- wenn die Ammoniumhydroxidkonzentration niedriger ist als ein zulässiger Höchstwert, pneumatische Verbindungstrennung (135) des bestimmten Reaktors (51) von dem Behandlungsbehälter (11);
alternativ ausgeführt werden zu oder gefolgt sind von entsprechenden Schritten (132'-135), in welchen der andere Reaktor (52) durch den bestimmten Reaktor (51) ersetzt wird oder durch einen weiteren Reaktor der mindestens zwei Regenerationsreaktoren (51,52), der sich von dem bestimmten Reaktor (51) und von dem anderen Reaktor (52) unterscheidet, und wobei der bestimmte Reaktor (51) durch den anderen Reaktor (52) ersetzt wird,
wobei ferner ein folgender Schritt bereitgestellt wird
- Entfernen (139) des finalen Abwassers aus dem bestimmten Reaktor (51) oder aus dem anderen Reaktor (52) oder aus dem weiteren Reaktor nach dem Schritt der pneumatischen Verbindungstrennung (135) und vor dem Schritt des pneumatischen Verbindens (132) des Behandlungsbehälters (11).

## Revendications

1. Procédé d'élimination d'eau à partir d'un mélange (2) contenant de l'eau et un composé, ledit mélange (2) étant à un rapport initial entre ladite eau et ledit composé, ledit procédé comprenant les étapes suivantes :

    - l'agencement préalable (101) d'un contenant de traitement (11) dans lequel ledit mélange (2) est présent ;
    - l'introduction (111) d'un courant d'un gaz de traitement (3) contenant de l'ammoniac dans ledit contenant de traitement (11), et le fait d'amener ledit gaz de traitement (3) à rentrer en contact avec ledit mélange (2), de telle manière qu'une partie dudit ammoniac réagisse avec ladite eau dudit mélange (2), formant de l'hydroxyde d'ammonium ;
    - le maintien (112) dudit mélange (2) à une température de traitement supérieure à 27 °C, à laquelle ledit hydroxyde d'ammonium est dans un état gazeux,
    - l'extraction (113) d'un courant de gaz d'échappement (4) à partir dudit contenant de traitement (11), ledit courant comprenant ledit hydroxyde d'ammonium et un gaz de traitement non réagi (3),
de manière à éliminer progressivement de l'eau à partir dudit mélange (2) pendant que ledit courant dudit gaz de traitement (3) est fourni, et que ledit courant de gaz d'échappement (4) est extrait dans ledit/à partir dudit contenant de traitement (11), et par conséquent que ledit mélange (2) contenant ledit composé est concentré ;
    - la poursuite (110) desdites étapes d'alimentation (111), de maintien (112) et d'extraction (113) au moins jusqu'à ce qu'un concentré final (2') dudit composé soit obtenu à un rapport final prédéterminé entre ladite eau et ledit composé.

**2.** Procédé selon la revendication 1, dans lequel ledit composé est un sel ayant une concentration de saturation dans l'eau, ledit mélange (2) est une solution homogène dudit sel et ladite étape d'extraction (113) est poursuivie jusqu'à ce qu'une concentration dudit sel plus élevée que ladite concentration de saturation soit atteinte, afin de cristalliser ledit sel dans ledit contenant de traitement.

**3.** Procédé selon la revendication 1, dans lequel lesdites étapes d'alimentation (111), de maintien (112) et d'extraction (113) sont poursuivies jusqu'à ce qu'une quantité d'humidité prédéterminée soit laissée dans ledit composé (8), en particulier jusqu'à ce que ledit composé (8) soit essentiellement sec.

**4.** Procédé selon la revendication 1, dans lequel :

- ledit contenant de traitement comprend une cuve (11) et ladite étape d'extraction (113) est réalisée au travers d'une conduite de ventilation (21) en connexion hydraulique avec ladite cuve (11) ;
- un contenant tubulaire supplémentaire (12) est agencé le long de ladite conduite de ventilation (21), ledit contenant tubulaire supplémentaire comprenant des éléments internes favorisant le contact (12') pour favoriser un contact entre une phase liquide et une phase gazeuse,
- pendant lesdites étapes d'introduction (111), de maintien (112) et d'extraction (113), une étape de recyclage (114) d'une quantité dudit mélange (2) est réalisée, entre une sortie et une entrée de ladite cuve (11) au travers dudit contenant tubulaire (12).

**5.** Procédé selon la revendication 4, dans lequel ledit contenant tubulaire (12) est monté sur ladite cuve (11) d'une manière semblable à un condensateur à reflux, c.-à-d. de telle manière qu'un liquide présent dans ledit contenant tubulaire (12) retombe dans ladite cuve (11), et ladite étape de recyclage (114) comprend une étape de pompage dudit mélange (2) à partir de ladite sortie de la cuve (11) jusqu'à une portion d'extrémité supérieure (14') dudit contenant tubulaire (12).

**6.** Procédé selon la revendication 4, dans lequel au moins une partie dudit courant dudit gaz de traitement (3) est fournie au niveau d'une portion d'extrémité inférieure (14") dudit contenant tubulaire (12), dans ladite étape d'introduction (111).

**7.** Procédé selon la revendication 1, dans lequel ledit mélange (2) comprend un solide humide, en particulier une boue usée issue d'un procédé industriel, ladite eau étant une eau d'imbibition dudit composé.

**8.** Procédé selon la revendication 1, dans lequel ladite étape d'agencement préalable (101) comprend une étape de préparation (102) dudit mélange (2) comprenant les étapes suivantes :

- l'agencement préalable (103) d'un déchet liquide (2"), ledit déchet liquide (2) contenant de l'eau, un acide et des cations d'un métal, et ayant une valeur de pH initiale ;
- l'ajout (104) d'un additif alcalin (1,3") audit déchet liquide (2"), jusqu'à ce qu'une valeur de pH finale prédéterminée soit atteinte dans ledit déchet liquide (2"), afin d'amener lesdits cations à précipiter sous la forme d'hydroxydes de métal solides, ledit additif alcalin formant ses propres ions dissous ;
- la séparation (107) desdits hydroxydes de métal solides (9) à partir dudit déchet liquide (2") et l'obtention dudit mélange à traiter constitué par une solution homogène (2) dudit composé comprenant un sel desdits ions dudit additif alcalin et d'un anion dudit acide.

**9.** Procédé selon la revendication 8, dans lequel ladite étape d'ajout (104) dudit additif alcalin comprend :

- une étape d'ajout (105) d'une quantité d'un premier additif alcalin (1) sélectionné dans le groupe constitué par l'oxyde de magnésium $MgO$, l'hydroxyde de magnésium $Mg(OH)_2$ et le carbonate de magnésium $MgCO_3$, ladite quantité dudit premier additif alcalin (1) étant sélectionnée de manière à atteindre une valeur de pH intermédiaire dans ledit déchet liquide (2") inférieure à 5,5, de manière à amener une première portion desdits cations à précipiter sous la forme d'hydroxydes de métal solides ;
- une étape d'introduction (106) d'un deuxième additif alcalin comprenant une première quantité d'ammoniac (3") dans ledit déchet liquide (2"), jusqu'à ce que ladite valeur de pH finale soit atteinte dans ledit déchet liquide (2"), de manière à amener une deuxième quantité résiduelle desdits cations à précipiter sous la forme d'hydroxydes de métal solides,
ladite étape de séparation (107) fournissant ledit mélange à traiter constitué par une solution homogène (2) dudit composé comprenant un premier sel desdits ions dudit additif alcalin et un deuxième sel d'ammonium,

EP 3 577 078 B1

lesdits premier et deuxième sels comprenant un même anion dudit acide.

10. Procédé selon la revendication 8 ou 9, dans lequel ledit acide est l'acide sulfurique et ledit sel est un sulfate, ou lesdits premier et deuxième sels sont des sulfates.

11. Procédé selon la revendication 1, dans lequel ladite étape d'agencement préalable (101) comprend une étape de préparation (102) dudit mélange (2), comprenant les étapes suivantes :

- l'agencement préalable (103) d'une solution aqueuse (2) d'un acide minéral ;
- l'introduction (106) d'une première quantité d'ammoniac (3") dans ladite solution (2) d'un acide minéral, formant des ions ammonium dans ladite solution (2), jusqu'à ce qu'une concentration prédéterminée d'un sel d'ammonium dudit acide minéral soit atteinte, et l'obtention dudit mélange (2) constitué par une solution homogène (2) dudit composé comprenant ledit sel d'ammonium.

12. Procédé selon la revendication 1, dans lequel ladite température de traitement est sélectionnée dans la plage allant de 40 °C à 60 °C.

13. Procédé selon la revendication 1, dans lequel des étapes de condensation (121) d'hydroxyde d'ammonium (5) à partir dudit courant de gaz d'échappement (3), et de collecte (122) dudit hydroxyde d'ammonium condensé sous la forme d'une solution aqueuse (5) sont prévues.

14. Procédé selon la revendication 1, dans lequel des étapes de régénération (140) et de récupération d'ammoniac gazeux en partant dudit hydroxyde d'ammonium condensé (5) sont prévues, ladite étape de régénération (140) comprenant les étapes suivantes :

- l'ajout (141) d'un réactif alcalin (6), en particulier d'hydroxyde de calcium Ca(OH)$_2$, à ladite solution aqueuse (5) dudit hydroxyde d'ammonium, afin d'augmenter la valeur de pH de ladite solution aqueuse (5), et la libération d'ammoniac gazeux regénéré (7) à partir de ladite solution aqueuse (5), transformant ladite solution aqueuse en une eau usée finale ;
- le maintien (142) d'une température de régénération dans ladite solution aqueuse (5) dudit hydroxyde d'ammonium ;
- l'introduction (143) dudit ammoniac gazeux régénéré (7) conjointement avec ledit courant dudit gaz de traitement (3), dans ledit contenant de traitement (11).

15. Procédé selon les revendications 13 et 14, dans lequel une étape est prévue (130) d'agencement préalable :

- d'une cuve de collecte (40) agencée pour recevoir ladite solution aqueuse (5) dudit hydroxyde d'ammonium ;
- d'au moins deux réacteurs de régénération (51,52), chacun configurés pour être sélectivement mis en connexion hydraulique avec ladite cuve de collecte (40), de manière à recevoir ladite solution aqueuse (5) dudit hydroxyde d'aluminium, et configurés pour être sélectivement mis en connexion pneumatique avec ledit contenant de traitement (11), de manière à transférer sélectivement des vapeurs générées par lesdits réacteurs de régénération (51,52) dans ledit contenant de traitement (11) ;

les étapes supplémentaires suivantes étant prévues :

- le transport (131) d'une quantité de ladite solution aqueuse (5) dudit hydroxyde d'ammonium à partir de ladite cuve de collecte (40) jusqu'à un réacteur déterminé (51) parmi lesdits au moins deux réacteurs de régénération (51,52) ;
- la connexion pneumatique (132) dudit réacteur déterminé (51) audit contenant de traitement (11),
lesdites étapes :

- d'ajout (141) dudit réactif alcalin (6) ;
- de maintien (142) de ladite température de régénération ;
- d'introduction (143) dudit ammoniac gazeux régénéré (7),
étant réalisées dans ledit/en partant dudit réacteur déterminé (51) ;

- le transport (133) d'une quantité supplémentaire de ladite solution aqueuse (5) dudit hydroxyde d'ammonium à partir de ladite cuve de collecte (40) jusqu'à un autre réacteur (52) parmi lesdits au moins deux réacteurs de

21

régénération (51,52) distinct dudit réacteur déterminé (51) ;

- la mesure (134) d'une concentration d'hydroxyde d'ammonium de ladite solution aqueuse contenue dans ledit réacteur déterminé (51) pendant ladite étape d'introduction (143) dudit ammoniac gazeux régénéré (7) dans ledit contenant de traitement (11) ;

- si ladite concentration d'hydroxyde d'ammonium est inférieure à une valeur maximale admissible, la déconnexion pneumatique (135) dudit réacteur déterminé (51) dudit contenant de traitement (11) ;

qui sont réalisées en alternance avec ou sont suivies par des étapes correspondantes (132' à 135) dans lesquelles ledit autre réacteur (52) est remplacé par ledit réacteur déterminé (51) ou par un réacteur supplémentaire parmi lesdits au moins deux réacteurs de régénération (51, 52) distinct dudit réacteur déterminé (51) et dudit autre réacteur (52), et ledit réacteur déterminé (51) est remplacé par ledit autre réacteur (52), l'étape suivante étant également prévue :

- l'élimination (139) de ladite eau usée finale à partir dudit réacteur déterminé (51) ou à partir dudit autre réacteur (52) ou à partir dudit réacteur supplémentaire après ladite étape de déconnexion pneumatique (135) et avant ladite étape de connexion pneumatique (132) dudit contenant de traitement (11).

## Fig. 1

| Prearranging a treatment container with the mixture to be treated | 101 |

110

| Feeding a treatment gas (NH3) | 111 | Maintaining a treatment temperature | 112 | Extracting an exhausted gas | 113 |

114
Revcycling the mixture through a tubular container

115
Removing NH₄OH residues from the concentrate

199
Withdrawing a concentrate of the compound or a solid compound with a predetermined moisture amount or a dry compound

## Fig. 2

Mixture — 2
Treatment gas (NH₃) — 3,3"
4
13
15
16
11
2
16'
19
T

## Fig. 3

Mixture — 2
Treatment gas (NH₃) — 3,3"
13
15
16
11
2'
16'
19
T

## Fig. 4

## Fig. 5

Preparaing the mixture to be treated starting from an acid waste containing metal cations

Prearranging an acid waste containing cations

Feeding a first alkaline additive

Feeding a first amount of NH₃

Separating solid metal hydroxides

## Fig. 6

step 110

# Fig. 7

101

102

**Preparing the mixture to be treated starting from a waste containing cations**

103

**Prearranging an acid water solution**

106

**Feeding a first amount of NH₃**

**fase 110**

# Fig. 8

2
Mixture

T

61

2

16'

15

16

3,3''
Treatment gas (NH₃)

64'

4

62

62'

69'

69

62'

2'
Concentrate

65

68

63

64''

67

# Fig. 9

2
Mixture

NH₃
make-up

70

3'

3

T

16

13

15

11

4

2

19

3

2'
Concentrate

4'

30

36

41

36

5

16'

5

40

42

# Fig. 10

Prearranging a treatment container
with the mixture to be treated — 101

110

Feeding a
treatement gas (NH3) — 111

Maintaining a treate-
ment temperature — 112

Extracting an
exhausted gas — 113

120

Condensing
NH4OH — 121

Collecting conden-
sed NH4OH as a
water solution — 122

Removing NH4OH residues
from the concentrate — 115

Withdrawing a concentrate
of the compound or a solid
compound with a predeter-
mined moisture amount or a
dry compound — 199

# Fig. 11

Conveying NH4(OH) into a
rigeneration reactor — 131,133

Pneumatically connecting
the reactor with the
treating container — 132

Regeneration — 140

Measuring NH4OH
concentration — 134

Conc. NH4OH
about 0 ?

NO

SI'

Pneumatically disconnec-
ting the reactor from the
treatment container — 135

Removing the final waste
from the regeneration reactor

139

# Fig. 12

**101**

Prearranging a treatment
container with the mixture
to be treated

**130**

Prearranging
a collection tank and a
rigeneration reactor

**111**  **110**

Feeding a
treatement gas (NH$_3$)

**112**

Maintaining a treate-
ment temperature

**113**

Extracting an
exhausted gas

**120**

**121**

Condensing NH$_4$OH

**122**

Collecting conden-
sed NH$_4$OH as a
water solution

**115**

Removing a NH$_4$OH
residue from the
concentrate

**199**

Withdrawing a concentrate
of the compound or a solid
compound with a predeter-
mined moisture amount or a
dry compound

**140**

**141**

Adding an alkaline
reagent to the
NH$_4$OH solution
and generating
gaseous NH$_3$

Maintaining a
regeneration
temperature

Forming and
extracting
gaseous NH3

**142**      **143**

**Fig. 13**

**EP 3 577 078 B1**

**REFERENCES CITED IN THE DESCRIPTION**

**Patent documents cited in the description**

- AU 500691 B2